# EUROPÄISCHE PATENTSCHRIFT

(11) **EP 2 837 256 B1**
(45) Veröffentlichungstag und Bekanntmachung des Hinweises auf die Patenterteilung: **03.08.2016**
(21) Anmeldenummer: 13715188.2
(22) Anmeldetag: 03.04.2013
(51) Int. Cl.: H05B 3/26, B29C 45/26, B29C 45/73, H05B 3/06, B29C 45/27, H05B 1/02

(54) **WERKZEUGEINSATZ MIT SCHICHTHEIZUNG, FORMPLATTE MIT EINEM SOLCHEN WERKZEUGEINSATZ UND VERFAHREN ZUM BETRIEB EINES SOLCHEN WERKZEUGEINSATZES**
TOOL INSERT WITH LAYERED HEATER, MOLD PLATE WITH SUCH TOOL INSERT AND METHOD FOR OPERATING SUCH A TOOL INSERT
PLAQUETTE D'OUTIL AVEC CHAUFFAGE EN COUCHE, PLAQUE DE MOULE AVEC TELLE PLAQUETTE D'OUTIL ET PROCÉDÉ DE FONCTIONNEMENT D'UNE TELLE PLAQUETTE D'OUTIL

(30) Priorität: 11.04.2012 DE 102012103120
(43) Veröffentlichungstag der Anmeldung: 18.02.2015
(73) Patentinhaber: GÜNTHER Heisskanaltechnik GmbH, 35066 Frankenberg (DE)
(72) Erfinder: GÜNTHER, Herbert, 35108 Allendorf (DE); SOMMER, Siegrid, 35099 Burgwald (DE); ZIMMERMANN, Frédéric, 90482 Nürnberg (DE); SCHNELL, Torsten, 35104 Lichtenfels (DE)
(74) Vertreter: Patentanwälte Olbricht Buchhold Keulertz
(86) Internationale Anmeldenummer: PCT/EP2013/057051
(87) Internationale Veröffentlichungsnummer: WO 2013/152976

(56) Entgegenhaltungen:
- WO-A1-01/11924
- WO-A2-2008/041122
- US-A- 4 828 479
- US-A1- 2005 109 767
- US-A1- 2008 145 472
- US-A1- 2009 001 066
- US-A1- 2009 081 324
- US-B2- 7 182 890

## Beschreibung

Die Erfindung betrifft eine Förmplatte gemäß dem Oberbegriff von Anspruch 1 mit einem Werkzeugeinsatz und ein Verfahren zum Betrieb eines solchen Werkzeugeinsatzes gemäß Anspruch 18.

Eine Formplatte gemäß dem Oberbegriff des Anspruchs 1 ist aus US7 182 890 B2 bekannt. Spritzgießwerkzeuge umfassen typischerweise eine Formplatte mit einem Formnest, in welches durch wenigstens eine Angussöffnung ein erwärmtes fließfähiges Material, insbesondere Kunststoff, eingeleitet wird. Innerhalb des Formnestes härtet das fließfähige Material aus und es entsteht ein Bauteil. Dieses wird anschließend entformt.

Im einfachsten Falle ist die Formplatte zweiteilig ausgebildet und die Formhälften werden zur Entformung voneinander getrennt. Es sind jedoch Ausführungen mit höherer Anzahl an Formplattenfragmenten oder sogenannte bewegliche Schieber bekannt, um komplexe Strukturen mit Hinterschneidungen entformen zu können.

Problematisch ist die Temperaturverteilung während des Einleitens des fließfähigen Materials in das Formnest und während des Aushärtens. Dadurch bedingte bekannte Fehlerbilder sind unter anderem Lunker, nicht vollständig gefüllte Formnester, Schublinien (auch Tigerlinien genannt), Bindenähte und unvollständige Narbungsausprägungen. Diese Mängel sind nicht nur optische Makel, sondern stellen bei sicherheitsrelevanten Bauteilen auch eine Gefahr dar. Besonders problematisch ist die Herstellung von Bauteilen mit hohem Aspektverhältnis. Dieses bestimmt sich aus dem Verhältnis der Formnesttiefe ausgehend von der Angussöffnung zu der kleinsten lateralen Ausdehnung des Formnestes, sowie aus der Gesamtgröße des Bauteils. Je kleiner das Bauteil ist, desto höher ist das Aspektverhältnis. Bei dem Füllvorgang eines Formnestes mit hohem Aspektverhältnis kühlt das fließfähige Material noch in Bewegung befindlich soweit ab, dass es ins Stocken gerät - es entstehen Schublinien und das Formnest wird ggf. nicht vollständig gefüllt -, die Narbungsstruktur nicht vollständig gefüllt wird - es entstehen unvollständige Narbungsausprägungen - und an der Materialfront entsteht ein gehärteter Film, sodass beim Aufeinandertreffen zweier Teilströme eine Bindenaht entsteht.

Bei den Anforderungen an die heutigen Bauteile können diese Probleme nicht mehr alleine durch hohe Einspritzdrücke behoben werden. Daher sind Heizvorrichtungen auf Seiten von Spritzgießdüsen und der Formplatte sowie Kühlvorrichtungen auf Seiten der Formplatte bekannt, um Einfluss auf die Temperaturverteilung nehmen zu können. Dies soll helfen, die auftretenden Fehler zu vermeiden.

Zu den bekanntesten Verfahren zur Temperierung der Formplatte sind Kanalstrukturen zur Durchleitung von temperierten Fluiden, interne und externe Induktionsheizungen, Infrarotstrahlung bei geöffnetem Werkzeug und Widerstandsheizelemente zu zählen.

Die Temperierung mit Wasser bzw. Öl als Wärmeträgermedium ist etabliert, jedoch mit einem schlechten Wirkungsgrad belastet. Dieser tritt durch hohe Verluste in der Zuleitung und der trägen Dynamik beim Temperaturwechsel ein. Letzterer ist erforderlich, um die Formplatte vor und während der Einleitung des fließfähigen Materials in das Formnest zu erwärmen und anschließend das fließfähige Material durch Abkühlen auszuhärten. Außerdem ist die Temperierung auf circa 160 °C bis 200 °C begrenzt.

Mit einer Induktionsheizung lassen sich zwar höhere Leistungen erzielen, jedoch ist die Integration in das Spritzgießwerkzeug sehr aufwendig und teuer. Außerdem werden auch hier relativ große massebehaftete Bauteile erwärmt, deren Temperaturwechsel träge ist. Dies verlangsamt die Produktionszyklen.

Die Erwärmung mittels Infrarotstrahlung greift das Prinzip der Wärmestrahlung auf. Hierbei wird die Formnestoberfläche von außen mittels Wärmestrahlung beheizt. Aufgrund meist sehr fein bearbeiteter Oberflächen der Formnester ist der Emissionsfaktor jedoch hoch und der Wirkungsgrad der Beheizung gering. Außerdem sind die erreichbaren Temperaturen durch die Baugröße und Leistungsverteilung der Emittenten eingeschränkt. Schließlich erfolgt die Bestrahlung bei geöffnetem Werkzeug, wodurch die Produktionszyklen erheblich verlängert sind.

In wt Werkstatttechnik online Jahrgang 99 (200) H. 11/12, S. 830-836 von Dipl.-Ing. Ingo Brexeler und Nico Küls (BREXLER et al) wird in dem Aufsatz "Funktionale Oberflächen dynamisch temperiert" eine hochdynamische Werkzeugtemperierung beschrieben. Diese sieht im Werkzeug integrierte Formeinsätze mit einer Hochleistungskeramik (CPH) und einer kavitätsnahen Kühlung vor.

Nachteilhaft ist hierbei jedoch, dass die Heizelemente gemäß BREXLER et al eine relativ große erwärmte Masse umfassen. Dies führt zu einem langsamen Abkühlen des Formnestes was mit langen Zykluszeiten einhergeht. Dem kann auch nur bedingt durch die vorgeschlagene Kühlung mittels Durchleitung eines Kühlmediums durch Fluidkanäle abgeholfen werden.

Aufgabe der Erfindung ist es daher, die Nachteile des Standes der Technik zu beseitigen und eine Vorrichtung zu schaffen, mit der möglichst schnelle Zykluszeiten bei der Fertigung von Bauteilen aus einem fließfähigen Material, insbesondere aus Kunststoff, bei hoher Bauteilqualität ermöglicht. Insbesondere soll die Vorrichtung eine hoch dynamische Temperierung des Formnestes ermöglichen, die variabel an die geforderten Temperaturen anpassbar, einfach installierbar, sicher im Betrieb sowie kostengünstig ist und einen hohen Wirkungsgrad hat.

Hauptmerkmale der Erfindung sind im kennzeichnenden Teil der Ansprüche 1 und 18 angegeben. Ausgestaltungen sind Gegenstand der nebengeordneten

### Ansprüche 2 bis 17.

Bei einem Werkzeugeinsatz zur zumindest abschnittsweisen Begrenzung eines Formnests, welches in einer Formplatte eines Spritzgießwerkzeugs zum Herstellen von Bauteilen aus einem fließfähigen Material ausgebildet ist, mit einem Grundkörper, der eine formgebenden Vorderseite für das Formnest und eine der formgebenden Vorderseite gegenüberliegende Rückseite aufweist, sieht die Erfindung vor, dass der Grundkörper auf seiner formgebenden Vorderseite eine Schichtheizung trägt.

Mit einem solchen Werkzeugeinsatz sind nunmehr sehr schnelle Zykluszeiten bei der Fertigung von Bauteilen aus einem fließfähigen Material möglich, da die Schichtheizung in Richtung des Formnestes weist. Eine Durchwärmung des Grundkörpers ist somit nicht notwendig. Die Schichtheizung erwärmt somit äußerst schnell die formgebende Oberfläche des Werkzeugeinsatzes. Bei Deaktivierung der Schichtheizung wird die geringe Wärmeenergie dieser dünnen Schicht sehr schnell abgeleitet, insbesondere in den Grundkörper und von hier in die Formplatte eines Werkzeugs.

Aufgrund der kurzen Aufheizzeiten und der schnellen Abkühlzeiten bedingt durch die minimal erwärmte Masse der Schichtheizung, werden sehr schnelle zyklische Temperaturprofile erreicht. Da die Erwärmung unmittelbar an der Oberfläche erfolgt, ist es unschädlich, die Formplatte hinter dem Werkzeugeinsatz und/oder der Grundkörper des Werkzeugeinsatzes durchgehend auf geringe Temperatur herunter zu kühlen. Die Aushärtungsgeschwindigkeit des fließfähigen Materials kann zudem durch Regelung der Schichtheizung gesteuert werden. Mittels unterschiedlicher Querschnitte der Heizleiterbahnen, gezielter Verteilung der Heizleiterbahnen und oder separate Heizleiterbahnen kann die Temperierung sogar lokal angepasst erfolgen, ohne dass es zu nennenswerten thermischen Beeinflussungen der benachbarten Oberflächenbereiche kommt. Damit sind eine hoch dynamische Temperierung des Formnestes mit hohen Temperaturgradienten über der Oberfläche sowie ein hoher Wirkungsgrad erzielbar.

Mit erfindungsgemäßem Werkzeugeinsatz sind damit Bauteile aus fließfähigem Material fertigbar, insbesondere aus Kunststoff, die eine sehr hohe Bauteilqualität aufweisen. So wird unter anderem der Fluss des fließfähigen Materials nicht durch eine sich rasch abkühlende Schmelzefront behindert. Entsprechend sind geringere Einspritzdrücke ausreichend, um das Formnest zu füllen. Hierdurch sind Schließeinheiten mit geringeren Schließkräften realisierbar, was zu geringeren Stückkosten pro Bauteil führt. Zudem werden eine verbesserte Abformung von Oberflächenstrukturen/Narbungen, eine leichtere Formfüllung bei Dünnwandteilen und eine Reduktion von Bindenähten, Schub- und Fließlinien erreicht. Hierfür ist es bspw. möglich, die Oberfläche des Formnestes kurz vor dem Einspritzen des fließfähigen Materials auf dessen Glas- bzw. Schmelztemperatur zu erhöhen und nach dem Füllvorgang auf Entformungstemperatur abzukühlen, ggf. unterstützt durch in Kühlkanälen fließendes Wärmeträgermedium.

Weiterhin ist die Installation von Werkzeugeinsätzen vielfach in der Praxis erprobt, wodurch auch ein erfindungsgemäßer Werkzeugeinsatz mit Schichtheizung einfach installierbar ist.

Die Schichtheizung sollte im Wesentlichen zwischen 10 bis 500 Mikrometer dick sein. Es können jedoch durchaus auch lokale Spitzendicken von bis zu 2 mm vorgesehen werden, insbesondere wenn die Oberflächenkontur des Formnestes dies erfordert. Zur Herstellung der Schichtheizung eignen sich insbesondere Dünn- und Dickschichttechnologien.

In der Erfindung ist vorgesehen, dass die Schichtheizung eine in Dickschichttechnologie hergestellte Heizleiterbahn aufweist. Hiermit ist eine bevorzugte Dicke der Heizleiterbahn von 1 bis 50 Mikrometer erzielbar. Wie man erkennt, ergibt sich hierdurch eine sehr geringe zu erwärmende Masse, was sehr dynamische Temperierungen ermöglicht. Besonders geeignet zur Herstellung der Heizleiterbahn sind die Materialien Silber (Ag), Palladium (Pd), Platin (Pt), Ruthenium (Ru) und Gold (Au) oder Mischungen aus diesen Materialien. Zur Ausbildung der Oberflächenkontur ist eine Fertigung der Heizleiterbahn in einem 3D-Druckverfahren empfehlenswert, insbesondere durch InkJet-Verfahren, Aerosol-Verfahren, Dispensen bzw. Mikro-Dispensen. Auch ein Tampondruckverfahren oder ein Siebdruckverfahren können zielführend sein.

Gemäß der erfindungsgemäßen Schichtheizung, weist diese eine in Dickschichttechnologie hergestellte sowie die Heizleiterbahn in Richtung der Vorderseite überziehende erste elektrische Isolationsschicht auf. Hierdurch werden am Werkzeug hantierende Personen vor Stromschlägen geschützt. Zudem werden Schäden der Heizleiterbahn durch Kurzschlüsse, z.B. durch mechanische Überbrückung, und durch mechanische Beschädigung vermieden. Schließlich kann mittels der Isolationsschicht eine von der Heizleiterbahn verursachte Mikro-Welligkeit ausgeglichen werden. Zur Erfüllung dieser Funktionen sollte die erste elektrische Isolationsschicht zwischen 10 bis 50 Mikrometer dick sein, lokale Spitzendicken von bis zu 2 mm können jedoch zur Abbildung der Oberflächengeometrie des Formnestes notwendig sein. Bei einer solchen Materialstärke bleibt die zu erwärmende Masse gering und eine hochdynamische Temperierung ist möglich. Als Materialien für die Herstellung der ersten Isolationsschicht eignen sich insbesondere Glas, Glaskeramik oder Email. Eine Optimierung dieser Materialien hinsichtlich einer hohen Wärmeleitfähigkeit sollte angestrebt werden. Die Herstellung als solches erfolgt vorzugsweise in einem 3D-Beschichtungsverfahren, um die Oberflächengeometrie des Formnestes abbilden zu können. Hierfür kommen insbesondere InkJet-Verfahren, Aerosol-Verfahren, Dispensen bzw. Mikro-Dispensen, Tampondruckverfahren und Siebdruckverfahren, aber auch Elektrophorese, Sprüh- oder Tauchverfahren sowie andere in der Emailtechnik übliche Verfahren in Frage.

Gemäß einer Variante der Erfindung ist vorgesehen, dass die Schichtheizung zwischen der Heizleiterbahn und dem Grundkörper eine in Dickschichttechnologie hergestellte zweite elektrische Isolationsschicht aufweist. Dies ist insbesondere dann erforderlich, wenn der Grundkörper elektrisch leitend ist. Zwar kann der Grundkörper auch aus einem nicht leitenden Material bestehen, die Einbettung eines Werkzeugeinsatzes in ein Formnest gelingt jedoch meist einfacher bei Verwendung eines Werkzeugstahls, insbesondere desselben wie das Material der Formplatte. Dann nämlich hat der Grundkörper die gleichen thermischen Eigenschaften, insbesondere auch die gleiche thermische Ausdehnungen wie die Formplatte. Die zweite elektrische Isolationsschicht sollte eine Dicke zwischen 10 bis 50 Mikrometer aufweisen. Damit ist eine durchgehend elektrisch isolierende Schicht erzielbar, die zudem nur eine geringe Masse aufweist. Als Materialien eignen sich für die zweite elektrische Isolationsschicht insbesondere Glas, Glaskeramik oder Email. Eine Optimierung dieser Materialien hinsichtlich einer hohen Wärmeleitfähigkeit sollte angestrebt werden. Die Herstellung der zweiten elektrischen Isolationsschicht erfolgt bevorzugt durch ein 3D-Beschichtungsverfahren, um die Oberflächenkontur des Formnestes abbilden zu können. Hierfür eignen sich InkJet-Verfahren, Aerosol-Verfahren, Dispensen bzw. Mikro-Dispensen, Tampondruckverfahren sowie Siebdruckverfahren, aber auch Elektrophorese, Sprüh- oder Tauchverfahren sowie andere in der Emailtechnik übliche Verfahren.

Gemäß einer näheren Ausgestaltung der erfindungsgemäßen Heizleiterbahn ist diese mit Anschlusskontakten versehen, die auf einer Zunge des Grundkörpers angeordnet sind, wobei die Zunge außerhalb des Formnestes positionierbar ist und auf der in Richtung der Vorderseite eine Dichtfläche ausgebildet ist, welche den formgebenden Bereich der Vorderseite begrenzt. Mithin können die Zunge und damit die Anschlusskontakte außerhalb des Formnestes positioniert werden und sind nicht den hohen Einspritzdrücken ausgesetzt. Zudem ist eine freiere Konstruktion der Anschlusskontakte außerhalb des Formnestes möglich, da keine definierte Oberflächengeometrie auszubilden ist. Weiterhin ist ein Betrieb der Schichtheizung mit einer externen Stromquelle und/oder Regeleinheit möglich. Die Dichtfläche kann mit einer gegenüberliegenden Dichtfläche einer Formplatte oder einem weiteren Werkzeugeinsatz korrespondieren. Entsprechend ist das Formnest bis auf gewünschte Öffnungen sicher verschlossen.

In einer weiteren erfindungsgemäßen Ausgestaltung ist die Heizleiterbahn mit Anschlusskontakten versehen, die in Richtung der Rückseite durch den Grundkörper hindurchgeführt sind. Damit kann die Dichtfläche vollständig durch die Formplatten ausgebildet sein, wodurch Passungsschwierigkeiten vermieden werden. Gleichzeitig können die elektrischen Anschlüsse auf einfache Weise unterhalb des Werkzeugeinsatzes aus dem Formnest herausgeführt werden.

Zur Herstellung einer sicheren Kontaktierung zwischen den Anschlusskontakten und der Heizleiterbahn ist eine Weiterbildung vorteilhaft, bei der die Anschlusskontakte mit einer Kraft in Richtung der Anschlussflächen der Heizleiterbahn kraftbeaufschlagt sind. Alternativ oder ergänzend können die Anschlusskontakte stoffschlüssig mit den Anschlussflächen der Heizleiterbahn verbunden sein.

Sofern die Anschlusskontakte in Richtung der Rückseite durch den Grundkörper hindurchgeführt sind, ist eine Variante der Erfindung zielführend, bei der ein Isolationskörper mit einem oder mehreren Anschlusskontakten durch den Grundkörper hindurchgeführt ist, wobei der Isolationskörper auf der Seite der Schichtheizung bündig mit dem Grundkörper abschließt und die Anschlusskontakte auf dieser Seite Kontaktflächen ausbilden. Die zweite elektrische Isolationsschicht sollte wenigstens eine Aussparung im Bereich der Kontaktflächen der Anschlusskontakte aufweisen. Bevorzugt wird die Heizleiterbahn anschließend mit ihren Anschlussbereichen in Dickschichttechnologie auf die Kontaktflächen der Anschlusskontakte aufgebracht.

Eine wichtige Fortbildung der Erfindung sieht vor, dass die Schichtheizung in Richtung der Vorderseite von einer abschließenden Konturschicht überzogen ist, welche die formgebende Vorderseite ausbildet. Typischerweise unterscheiden sich die Oberflächen und Materialeigenschaften von Formnestern und Schichtheizungen. Dies macht die Abstimmung der Oberflächen zur Erzielung einer gleichmäßigen Bauteiloberfläche schwierig. Mit der erfindungsgemäßen Konturschicht kann dieses Problem auf einfache Weise überwunden werden.

Gemäß einer erfindungsgemäßen Konstruktion, ist die Konturschicht im Wesentlichen zwischen 50 und 500 Mikrometer dick. Dies ist ausreichend, um die Qualität der Oberflächenkontur bereitzustellen und ein Wellenstruktur einer Heizleiterbahn abzudecken. Zudem kann die Konturschicht nach dem Auftragen nachbearbeitet werden, so zum Beispiel eine gemeinsame Narbung der Konturschicht mit der restlichen Konturoberfläche des Formnestes erfolgen. Bei Verwendung von gleich reagierenden Materialien der Konturschicht und der Formplatte, sind so auch gleichmäßige chemische Narbungen über die Trennkannten hinweg realisierbar. Besonders bevorzugt ist die Konturschicht im Wesentlichen zwischen 70 und 150 Mikrometern dick, in lokalen Spitzenbereichen können jedoch bis zu 2 mm Materialstärke vorgesehen sein. Damit ist auch die Masse der Konturschicht niedrig und beeinflusst nur geringfügig die hochdynamische Temperierung durch die Schichtheizung.

In einer Variante der Erfindung ist die Konturschicht durch Detonationsbeschichtung oder durch Mikroschmieden hergestellt. Mittels Detonationsbeschichtung lassen sich besonders feine Mikrostrukturen herstellen, deren Restporositäten unter 0,25 % liegen. Zudem liegt die Haftfestigkeiten bei über 70 MPa und die Konturschicht hat auch bei einer Vielzahl an Einspritzvorgängen eine hohe Lebensdauer. Bei einem Mikroschmiede-Verfahren wird Metallpulver unter hohem Druck verdichtet. Hierfür wird das Metallpulver insbesondere unter Einsatz von Wasser, Strom und Druckluft verdichtet. Es entstehen hierbei sehr feine Strukturen, die zudem sehr komplex sein können.

In einer anderen Herstellungsvariante ist die Konturschicht in Galvanotechnik oder durch ein chemisches Beschichtungsverfahren hergestellt. Mit Galvanisch-Nickel-Verfahren z.B. lassen sich Nickelschichten stromflussreguliert in sehr kurzen Zeiten mit sehr hohen Schichtdicken abscheiden. Im Unterschied dazu erfolgt die Abscheidung von chemischem Nickel ohne Anlegen eines äußeren elektrischen Stroms. Die zur Abscheidung der Nickelionen notwendigen Elektronen werden mittels chemischer Oxydationsreaktion im Bad selbst erzeugt. Dadurch werden besonders konturentreue Beschichtungen erhalten. Das Chemisch-Nickel-Verfahren eignet sich besonders gut für Schichten bis 50 Mikrometer, da bei größeren Schichtstärken mechanische Spannungen in der Schicht auftreten und die Abscheidung deutlich mehr Zeit beansprucht als beim Galvanisch-Nickel-Verfahren.

Beim Galvanisch-Nickel-Verfahren ist ein leitfähiger Untergrund bzw. eine leitfähige Zwischenschicht notwendig. Beim Chemisch-Nickel-Verfahren ist zumindest eine Bekeimung bei nichtleitendem Untergrund notwendig, da eine Abscheidung an blanken Metalloberflächen beginnt. Die Herstellung einer leitfähigen Zwischenschicht kann durch eines der vorher genannten Beschichtungsverfahren erreicht werden.

Vor dem Aufbringen der Konturschicht mit einem galvanischen oder chemischen Verfahren sollte ein chemisch aggressiver Reinigungsprozess durchgeführt werden, um die Haftung der Schicht zu gewährleisten. Bei Verwendung einer gegen die Reinigungsmittel nicht beständigen ersten elektrischen Isolationsschicht, sieht eine Variante der Erfindung vor, dass unter der Konturschicht eine chemisch resistente Zwischenschicht angeordnet ist. Diese hat mithin die Eigenschaften einer Schutzschicht und einer Haftschicht. Die Haltbarkeit des Werkzeugeinsatzes ist so besonders gut. Auch die Zwischenschicht kann durch eines der vorher beschriebenen 2D- bzw. 3D-Beschichtungsverfahren aufgebracht sein.

Ferner sieht eine erfindungsgemäße nähere Ausgestaltung vor, dass die Konturschicht aus einem Metall besteht, insbesondere aus einem Werkzeugstahl oder aus Nickel. Diese eignen sich sowohl hinsichtlich der Beschichtungsverfahren als auch den Anforderungen an die Haltbarkeit, Haftfestigkeit, Wärmeleitfähigkeit, Oberflächenbearbeitung und Oberflächengüte besonders gut.

Gemäß einer Ausgestaltung der Erfindung ist der Grundkörper aus Metall gefertigt, insbesondere aus einem Hartmetall oder einem Werkzeugstahl oder einer Legierung umfassend Chrom, Wolfram, Nickel, Molybdän und Kohlenstoff oder einer Legierung umfassend Chrom, Mangan, Phosphor, Silicium, Schwefel und Kohlenstoff oder einer Legierung umfassend Chrom, Titan, Niob, Mangan und Kohlenstoff hergestellt. Diese Werkstoffe sind besonders gut an eine umgebende Formplatte anpassbar. Gerade Hartmetalle sind zudem für eine Beschichtung mit Standardgläsern gut geeignet.

Gemäß einer erfindungsgemäßen alternativen Ausgestaltung ist der Grundkörper aus einer Keramik hergestellt. Dies ermöglicht eine unmittelbare Beschichtung des Grundkörpers mit der Heizleiterbahn. Außerdem sind Keramiken gut geeignet für eine Beschichtung mit Standardgläsern.

Eine Weiterentwicklung der Erfindung betrifft einen Schicht-Thermofühler, welcher in Richtung der Vorderseite vom Grundkörper getragen ist. Ein solcher ermöglicht es aufgrund seiner geringen Masse und der Möglichkeit einer direkten Integration in die Schichtheizung, z.B. zwischen den Heizleiterbahnen oder durch eine dünne Isolierschicht getrennt direkt über oder unter der Heizleiterbahn, die Temperatur extrem schnell und an der korrekten Position zu messen. Die Bestimmung der Temperatur ist so besonders genau. Klassische Thermoelemente mit Fühlerspitze müssten hingegen beabstandet zur konturgebenden Vorderseite positioniert werden. Da jedoch nur eine sehr dünne Schicht mit der Schichtheizung erwärmt wird, würde die Temperatur im Bereich der Fühlerspitze ggf. stark abweichen. Dies wird durch den erfindungsgemäßen Schicht-Thermofühler vermieden, was besonders vorteilhaft ist, da gerade die hochdynamischen thermischen Änderungen in der Schichtheizung bzw. auf der Heizeroberfläche erfasst werden können. Damit ist auch eine direkte zeitnahe Regelung der Schichtheizung und des Spritzwerkzeugs, insbesondere der Einspritzzyklen, möglich. Die Anschlüsse des Schicht-Thermofühlers können analog der Konstruktion der Anschlüsse der Schichtheizung erfolgen. Dabei können gemeinsame oder getrennte Einrichtungen vorgesehen werden.

Die Erfindung betrifft somit eine Formplatte für ein Spritzgießwerkzeug zum Herstellen von Bauteilen aus einem fließfähigen Material, umfassend ein von einer formgebenden Oberfläche eingefasstes Formnest, eine in das Formnest mündende Angussöffnung und eine Werkzeugeinsatzaufnahme, in welcher der Werkzeugeinsatz mit der erfindungsgemäßen Schichtheizungaufgenommen ist. Mit einer solchen Formplatte kann die Temperierung der Oberfläche innerhalb des Formnestes besonders dynamisch erfolgen. Auch sind die weiteren zuvor beschriebenen Vorteile des Werkzeugeinsatzes realisierbar.

Gemäß einer erfindungsgemäßen Weiterentwicklung der Formplatte ist der Werkzeugeinsatz mit der formgebenden Vorderseite bündig in die formgebende Oberfläche des Formnestes eingebettet. Damit kann die Oberflächengeometrie über den Werkzeugeinsatz ohne erkennbaren Übergang ausgebildet werden.

Hierzu trägt auch eine spezielle Variante der Erfindung bei, bei welcher die Vorderseite des Werkzeugeinsatzes und die formgebenden Oberfläche des Formnestes gemeinsam in der Einbausituation des Werkzeugeinsatzes in der Werkzeugeinsatzaufnahme durch Spanen und/oder Schleifen und/oder Polieren bearbeitet sind. Entsprechend können durch diese Bearbeitung Versatze zwischen der Vorderseite des Werkzeugeinsatzes und der Oberfläche des Formnestes eingeebnet werden. Auch sind feine Strukturen über die Trennlinie hinweg fertigbar.

Besonders bevorzugt erfolgt das Spanen und/oder Schleifen und/oder Polieren bei erwärmter Schichtheizung. Minimale thermisch bedingte Konturschwankungen werden so bei der Fertigung berücksichtigt. Hierdurch können die erste Isolationsschicht und die Konturschicht besonders dünn ausgebildet werden, ohne dass es zu einer welligen Oberfläche durch die Heizleiterbahn kommt. Die Heizleiterbahnen können jedoch auch als Konturgeber fungieren, sofern dies aus Designgründen des Bauteils gewünscht ist. Idealerweise erfolgt die Bearbeitung bei einer Temperatur, die der späteren Betriebstemperatur beim Aushärten des fließfähigen Materials, bzw. der Glastemperatur des fließfähigen Materials entspricht. Die Oberflächenkontur des Werkzeugeinsatzes kann sich somit erst dann verändern, wenn die Schichtheizung abkühlt. Dabei ist das Bauteil jedoch wenigstens teilausgehärtet und behält seine Form.

In einer weiteren Herstellungsvariante ist eine Narbung der Vorderseite des Werkzeugeinsatzes und der formgebenden Oberfläche des Formnestes gemeinsam in der Einbausituation des Werkzeugeinsatzes in der Werkzeugeinsatzaufnahme hergestellt. Auch eine solche technische oder chemische Narbung ist somit über die Trennlinie zwischen dem Werkzeugeinsatz und der Oberfläche des Formnestes hinweg fertigbar.

In einer erfindungsgemäßen vorteilhaften Einbauvariante, ist der Werkzeugeinsatz im Bereich einer Bindenahtposition eines Bauteils angeordnet. An welcher Stelle eine Bindenaht vorliegt, kann bereits vor Herstellung des Spritzgießwerkzeugs durch eine Einspritzsimulation festgestellt werden. Durch eine lokale Erwärmung im Bereich der Bindenaht, löst sich der frontale gehärtete Film auf und die Materialfronten vereinigen sich ohne Material- und/oder optischen Fehler.

Zur gleichmäßigen Temperierung des Formnestes und zum Abführen der von der Schichtheizung und dem eingespritzten fließfähigen Material eingebrachten Wärme, sieht eine Fortbildung der Formplatte vor, dass in dieser Fluidkanäle ausgebildet sind. Durch diese kann im Prozess ein Wärmeträgermedium geleitet werden. So kann die Formplatte beispielsweise kontinuierlich gekühlt werden. Die Kühlung muss dabei nicht während des Betriebs der Schichtheizung unterbrochen werden. Der Wirkungsgrad bleibt aufgrund der geringen Masse der zu erwärmenden Bereiche dennoch sehr hoch.

In einer weiteren Fortbildung sieht die Erfindung vor, dass der Werkzeugeinsatz mittels eines lösbaren Fixiermittels in der Werkzeugeinsatzaufnahme fixiert ist. Damit kann der Werkzeugeinsatz separat von der Formplatte ausgewechselt, überarbeitet und aufbereitet werden. Bei einem Defekt ist das Spritzgießwerkzeug zudem schnell wieder einsatzbereit. Bevorzugt ist das Fixiermittel durch eine außerhalb des Formnestes liegende Öffnung in der Formplatte betätigbar. Damit ist kein Hantieren innerhalb des Formnestes notwendig, und Beschädigungen an der Formnestoberfläche werden vermieden. Ausgebildet sein kann solch eine Fixierung durch eine Gewindebohrung oder eine Bohrung mit Bajonettkontur im Grundkörper, sowie durch eine Bohrung, die durch die Formplatte in die Werkzeugeinsatzaufnahme führt. Durch letztere ist dann eine Schraube oder ein Bajonett führbar und in der Bohrung im Grundkörper festlegbar. Alternativ könnten auch andere Spannelemente wie Klammern eingesetzt werden, die mit Formplatte und Grundkörper in Eingriff stehen.

Zudem bietet sich eine schwimmende Lagerung des Werkzeugeinsatzes in der Werkzeugeinsatzaufnahme an. Dies verringert Verformungen des Werkzeugeinsatzes durch ungleichmäßige thermische und/oder druckbedingte Spannungen.

Gemäß einer Fortbildung der Erfindung ist der Grundkörper thermisch mit der Werkzeugeinsatzaufnahme gekoppelt. Hierdurch kann die von der Schichtheizung und dem eingespritzten fließfähigen Material eingebrachte Wärmeenergie möglichst schnell und auf einfache Weise aus dem Bereich des Formnestes abgeführt werden. Erzielbar ist dies mittels einer (großen) Kontaktfläche zwischen dem Grundkörper und der Werkzeugeinsatzaufnahme. Eine hilfreiche Unterstützung bietet auch eine Wärmeleitpaste zwischen dem Grundkörper und der Werkzeugeinsatzaufnahme.

Die Erfindung betrifft ferner ein Verfahren zum Betrieb eines zuvor beschriebenen Werkzeugeinsatzes, in einem Formnest einer Formplatte eines Spritzgießwerkzeugs zum Herstellen von Bauteilen aus einem fließfähigen Material, bei dem zunächst ein Erwärmen der Schichtheizung durch Anlegen einer Spannung erfolgt, an das sich ein Starten eines Füllzyklus anschließt, bei dem fließfähiges Material in das Formnest eingeleitet wird, und bei dem es zu einem Reduzieren oder Ablegen der Spannung der Schichtheizung vor, während oder nach dem Füllzyklus kommt, bevor ein Öffnen des Formnests nach einer Abkühlphase und eine Entnahme des wenigstens teilweise ausgehärteten Bauteils vorgenommen werden.

Durch den erfindungsgemäßen Werkzeugeinsatz, können mittels des Verfahrens besonders schnelle Einspritzzyklen realisiert werden. Trotzdem ist die Qualität der abgespritzten Bauteile aufgrund der hochdynamischen Temperierung mittels der Schichtheizung besonders hoch.

Ein zusätzlicher optionaler Schritt des erfindungsgemäßen Verfahrens umfasst ein Leiten der Wärmeenergie des fließfähigen Materials und der Schichtheizung durch den Grundkörper in die Formplatte während der Abkühlphase. Auf diese Weise wird die Wärme möglichst schnell und auf konstruktiv einfache Weise aus dem Bereich des Formnestes abgeleitet. Schon kurz nach dem Ablegen der Spannung, ist die Schichtheizung und die unmittelbare Umgebung des Formnestes auf die Temperatur der Formplatte abgekühlt, da nur eine sehr kleine Masse erwärmt wurde, die im Verhältnis zu ihrem Volumen zudem eine große Oberfläche zur Wärmeleitung aufweist.

Eine Variante des erfindungsgemäßen Verfahrens sieht ein Durchleiten eines Wärmeträgermediums durch Fluidkanäle innerhalb der Formplatte während der Abkühlphase vor. Damit kann die Wärme aus den typischerweise relativ voluminösen und massebehafteten Formplatten kontinuierlich abgeführt werden, sodass die dynamische Temperierung auch über eine Vielzahl an Einspritzzyklen zuverlässig funktioniert.

Die erfindungsgemäße Schichtheizung erlaubt zudem eine Verfahrensvariante, bei der ein Durchleiten eines Wärmeträgermediums durch Fluidkanäle innerhalb der Formplatte während des Erwärmens der Schichtheizung und/oder des Füllzyklus erfolgt. Die Schichtheizung und die Formplatte können mithin dual temperiert werden. Dabei ist denkbar, dass bestimmte Bereiche der Formplatte mittels des Wärmeträgermediums erwärmt werden. Besonders vorteilhaft ist allerdings die Option, dass die Formplatte auch bei Aktivierung der Schichtheizung gekühlt werden kann, um die Temperatur auf einem möglichst geringen Niveau zu halten. Entsprechend ist der Temperaturfluss in die Formplatte bei Deaktivierung der Schichtheizung von dieser und aus dem Formnest heraus möglichst schnell.

Ferner sieht eine Fortbildung des Verfahrens ein Erwärmen der Schichtheizung auf wenigstens 150 °C vor dem Starten des Füllzyklus vor. Bei einer derartigen Temperatur ist bei den meisten fließfähigen Materialien eine signifikante Verbesserung des Füllverhaltens verglichen mit einem Füllen einer untemperierten Formplatte erkennbar und die Bauteile haben eine entsprechend hohe Qualität. Ein besonderer Vorteil der Schichtheizung wird durch die Möglichkeit erzielt, die Erwärmung innerhalb von 20 Sekunden, und besonders bevorzugt innerhalb von 8 Sekunden, vornehmen zu können. Entsprechend schnell sind die Spritzzyklen und es kann eine Vielzahl an Bauteilen pro Zeiteinheit gefertigt werden, was zu geringen Stückkosten führt.

Zur Erzielung einer hochdynamischen Temperierung trägt auch eine Verfahrensergänzung bei, die ein Halten der Temperatur des Grundkörpers auf im Wesentlichen der Temperatur einer den Werkzeugeinsatz aufnehmenden Werkzeugeinsatzaufnahme, sowie ein Beschränken der Erwärmung auf im Wesentlichen den Bereich der Schichtheizung vorsieht. Dieses Halten der Temperatur kann dabei auch die Aktivierungsphasen der Schichtheizung umfassen, sodass ein möglichst großes Temperaturgefälle zwischen der Schichtheizung und dem Grundkörper vorliegt. Der Grundkörper kann hierfür ebenfalls Fluidkanäle aufweisen, die bevorzugt mit Kühlkanälen der Formplatte gekoppelt sind. Hierdurch ist der Temperaturabfluss aus dem Bereich des Formnestes besonders gut.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Fig. 1: ein Spritzgießwerkzeug mit einem Werkzeugeinsatz in Explosionsdarstellung;
- Fig. 2: einen Schnitt durch ein Spritzgießwerkzeug mit einem Werkzeugeinsatz;
- Fig. 3: eine Formplatte und einen Werkzeugeinsatz in Explosionsdarstellung;
- Fig. 4: einen Schnitt einer Detailansicht durch ein Spritzgießwerkzeug mit einem Werkzeugeinsatz im Bereich des elektrischen Anschlusses einer Schichtheizung;
- Fig. 5: einen Schnitt einer Detailansicht durch einen Werkzeugeinsatz im Bereich des elektrischen Anschlusses einer Schichtheizung;
- Fig. 6: einen Schnitt einer Detailansicht durch eine Formplatte mit einem Werkzeugeinsatz im Bereich des elektrischen Anschlusses einer Schichtheizung; und
- Fig. 7: einen Schnitt einer Detailansicht durch einen Werkzeugeinsatz mit einer Schichtheizung im Bereich des elektrischen Anschlusses der Schichtheizung.

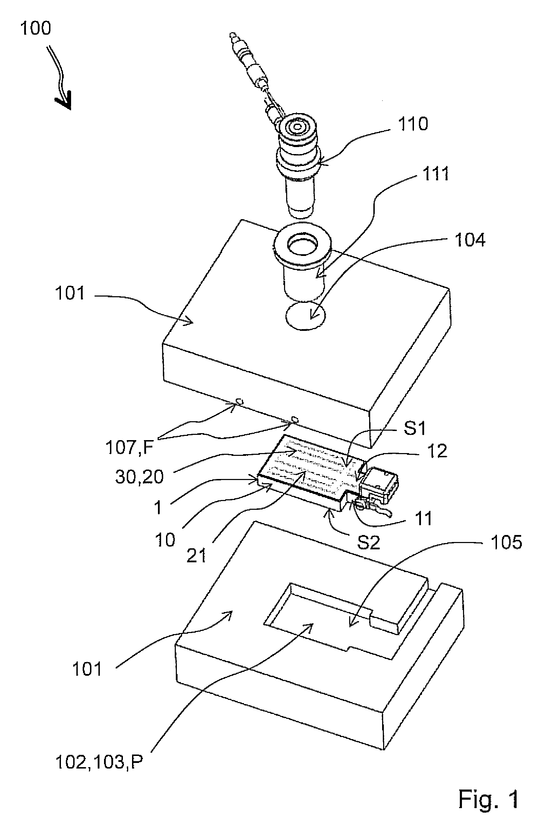

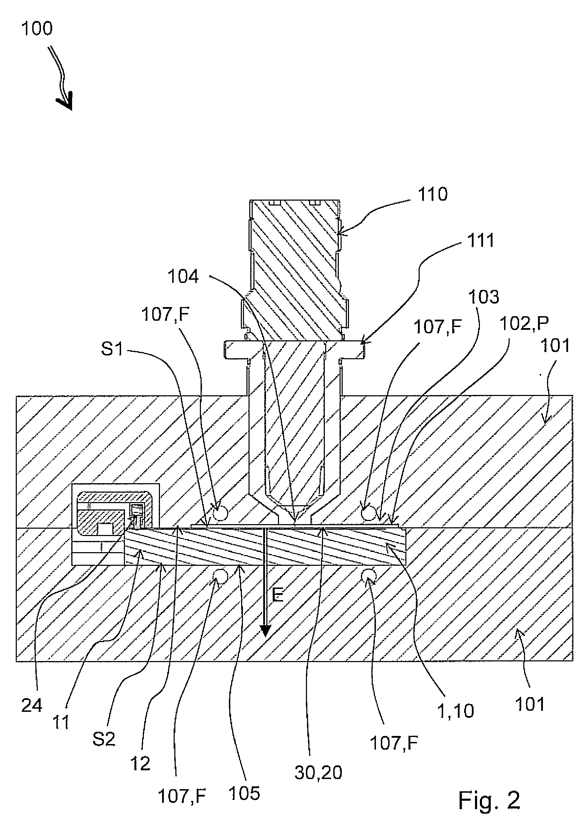

**Fig. 1** zeigt ein Spritzgießwerkzeug 100 zum Herstellen von Bauteilen P aus einem fließfähigen Material M mit einem Werkzeugeinsatz 1 in einer Explosionsdarstellung. In **Fig. 2** findet sich ein Schnitt durch ein solches Spritzgießwerkzeug 100 mit einem Werkzeugeinsatz 1. Das Spritzgießwerkzeug 100 gemäß der Fig. 1 und 2 hat eine zweigeteilte Formplatte 101. In der Formplatte 101, insbesondere zwischen deren beiden Hälften, ist ein Formnest 102 mit einer formgebenden Oberfläche 103 ausgebildet. Dabei weist die obere Hälfte der Formplatte 101 eine Angussöffnung 104 zum Einfüllen von fließfähigem Material M in das Formnest auf. In der Angussöffnung 104 ist ein Düseneinsatz 111 eingesetzt, in den sich wiederum eine Spritzgießdüse 110 erstreckt. Nicht näher eingegangen werden soll hier auf die Gestaltung der Spritzgießdüse 110 mit ihrer Düsenspitze, dem Materialrohr, dem Gehäuse, dem Materialrohrkopf, der Heizeinrichtungen, dem Thermofühler, deren elektrischen Anschlüsse sowie die Anbindung der Spritzgießdüse 110 an eine Maschinendüse oder einen Verteiler.

Zum Temperieren der Formplatte 101 ist in dieser ein Fluidkanal 107 eingebracht, durch den ein Wärmeträgermedium F leitbar ist. In der unteren Hälfte der Formplatte 101 ist eine Werkzeugeinsatzaufnahme 105 innerhalb des Formnestes 102 ausgebildet, in welcher der Werkzeugeinsatz 1 aufgenommen ist. Der Werkzeugeinsatz 1 ist in der hier gezeigten Ausführungsform schwimmend in der Werkzeugeinsatzaufnahme 105 gelagert. Dabei sind der Werkzeugeinsatz 1 und die Werkzeugeinsatzaufnahme 105 thermisch gekoppelt, insbesondere durch eine relativ große Kontaktfläche auf der Rückseite S2 des Werkzeugeinsatzes 1. Zur Unterstützung des thermischen Kontakts kann zusätzlich eine Wärmeleitpaste zwischen dem Werkzeugeinsatz 1 und der Werkzeugeinsatzaufnahme 105 eingebracht sein.

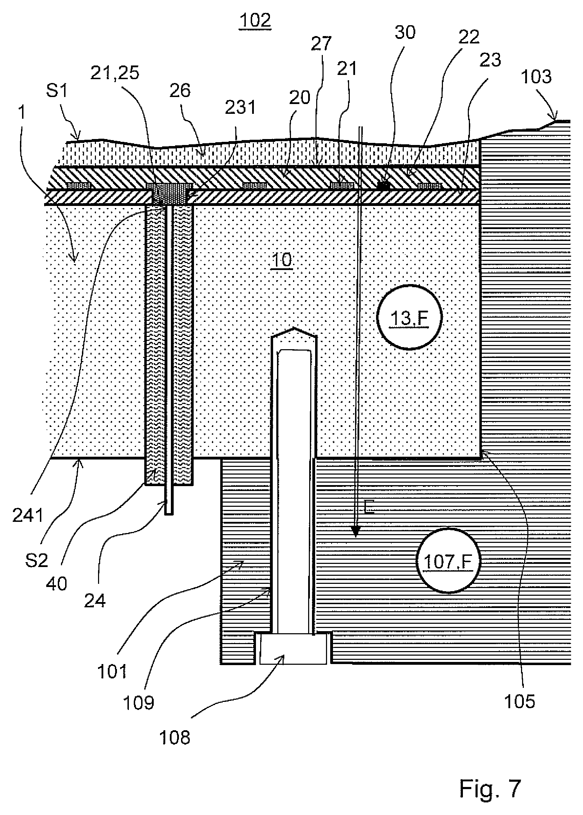

Weiterhin hat der Werkzeugeinsatz 1 eine in Richtung des Formnests 102 weisende sowie formgebende Vorderseite S1. Die Rückseite S2 weist wie beschrieben in Richtung der Formplatte 101. In Richtung der Rückseite S2 umfasst der Werkzeugeinsatz 1 einen Grundkörper 10, welcher in Richtung der Vorderseite S1 eine Schichtheizung 20 trägt. Die Schichtheizung 20 im Wesentlichen zwischen 10 bis 500 Mikrometer dick. Eine detaillierte Ansicht einer Schichtheizung 20 findet sich in Fig. 7. Man erkennt weiterhin, dass die Schichtheizung 20 eine in Dickschichttechnologie hergestellte Heizleiterbahn 21 aufweist. Diese ist zwischen 1 bis 50 Mikrometer dick und der Leitungsquerschnitt und damit der lokale elektrische Widerstand sind an die lokalen geforderten Wärmebedarfe angepasst. Möglich macht dies die Herstellung der Heizleiterbahn 21 mittels eines 3D-Beschichtungsverfahrens. Bei flachen Oberflächen sind auch 2D-Verfahren wie z.B. ein Siebdruck einsetzbar.

Die Schichtheizung 20 weist zudem eine in Dickschichttechnologie hergestellte sowie die Heizleiterbahn 21 in Richtung der Vorderseite S1 überziehende erste elektrische Isolationsschicht 22 auf. Diese ist zwischen 10 und 50 Mikrometer dick. Sie kann aus Glas, Glaskeramik oder Email hergestellt sein. Auch die erste elektrische Isolationsschicht 22 ist in einem 3D-Beschichtungsverfahren hergestellt. Bei flachen Oberflächen sind auch 2D-Verfahren wie z.B. ein Siebdruck einsetzbar. Hinzu kommt eine zwischen der Heizleiterbahn 21 und dem Grundkörper 10 angeordnete und in Dickschichttechnologie hergestellte zweite elektrische Isolationsschicht 23. Die zweite elektrische Isolationsschicht 23 ist zwischen 10 bis 50 Mikrometer dick. Herstellbar ist sie aus Glas, Glaskeramik oder Email. Notwendig ist die zweite Isolationsschicht 23, wenn der Grundkörper 10 aus einem Metall besteht, insbesondere aus einem Werkzeugstahl. Dieses ausgewählte Material ist elektrisch leitend.

Ferner ist die Schichtheizung 20 in Richtung der Vorderseite S1 von einer abschließenden Konturschicht 26 überzogen, welche die formgebende Vorderseite S1 ausbildet. Die Konturschicht 26 ist im Wesentlichen zwischen 50 und 500 Mikrometer dick, weist jedoch lokale Spitzendicken von bis zu 2 mm auf. Die Konturschicht 26 kann durch Detonationsbeschichtung oder durch Mikroschmieden hergestellt sein. Alternativ bietet sich eine Herstellung in Galvanotechnik oder durch ein chemisches Beschichtungsverfahren an. Die Konturschicht 26 besteht aus einem Metall, insbesondere aus einem Werkzeugstahl oder aus Nickel. Sofern ein nicht-elektrisch leitendes Material für die Konturschicht 26 ausgewählt wird, kann diese die Funktion der ersten elektrischen Isolationsschicht 22 übernehmen, bzw. die erste elektrische Isolationsschicht 22 bildet die Konturschicht 26 aus.

Der Werkzeugeinsatz 1 hat zudem einen Schicht-Thermofühler 30. Dieser wird in Richtung der Vorderseite S1 vom Grundkörper 10 getragen. Insbesondere ist er als Thermofühler-Bahn in den Schichtaufbau der Schichtheizung 20 integriert. Die Messung der Temperatur basiert insbesondere auf elektrischen Spannungen, die mit der Temperatur korrelieren.

Die Heizleiterbahn 21 ist mit Anschlusskontakten 24 versehen, die auf einer Zunge 11 des Grundkörpers 10 angeordnet sind. Detailliertere Ansichten solcher Anschlusskontakte 24 finden sich in den Fig. 2, 3, 4 und 5. Die Zunge 11 ist außerhalb des Formnestes 102 positioniert und bildet in Richtung der Vorderseite S1 eine Dichtfläche 12 aus, welche den formgebenden Bereich der Vorderseite S1 begrenzt. Diese Dichtfläche 12 korrespondiert mit einer Dichtfläche der oberen Hälfte der Formplatte 101. Die elektrischen Anschlüsse des Schicht-Thermofühlers 30 liegen analog im Bereich der Zunge 11.

Mit einem derartigen Spritzgießwerkzeug 100 ist nunmehr ein Verfahren zum Betrieb des Werkzeugeinsatzes 1 durchführbar, bei dem zunächst ein Erwärmen der Schichtheizung 20 durch Anlegen einer Spannung erfolgt. Anschließend wird ein Füllzyklus gestartet, bei dem fließfähiges Material M in das Formnest 102 eingeleitet wird. Während oder nach dem Füllzyklus wird die Spannung der Schichtheizung 20 reduziert oder abgelegt, um die Wärme aus dem Bereich des Formnestes in die Formplatte 101 abzuleiten, insbesondere durch Leiten der Wärmeenergie E des fließfähigen Materials M und der Schichtheizung 20 durch den Grundkörper 10 in die Formplatte 101. Aus letzterer kann die Wärme durch Temperierung mittels einer Durchströmung der Fluidkanäle 107 mit einem Wärmeträgermedium F abgeführt werden. Nach einer Abkühlphase wird das Formnest 102 geöffnet und das wenigstens teilweise ausgehärtete Bauteil P entnommen. Die Kühlung der Formplatte 102 mit dem Wärmeträgermedium F kann dabei auch während des Erwärmens der Schichtheizung 20 und/oder des Füllzyklus erfolgen. Idealerweise wird hierdurch die Temperatur des Grundkörpers 10 auf im Wesentlichen der Temperatur der Werkzeugeinsatzaufnahme 105 gehalten und die Erwärmung durch die Schichtheizung 20 auf den Bereich der Schichtheizung 20, ggf. inklusive der Konturschicht 26 beschränkt. Die Erwärmung der Schichtheizung 20 und damit der Vorderseite S1 des Werkzeugeinsatzes 1 erfolgt vor dem Starten des Füllzyklus bevorzugt auf wenigstens 150 °C. Aufgrund der geringen Masse ist dies in sehr kurzer Zeit realisierbar, bspw. innerhalb von 8 Sekunden. Die Abkühlung nach Deaktivierung der Schichtheizung 20 kann ebenfalls sehr schnell erfolgen. Alternativ kann sie durch ein Temperaturprofil der Schichtheizung 20 gezielt beeinflusst werden.

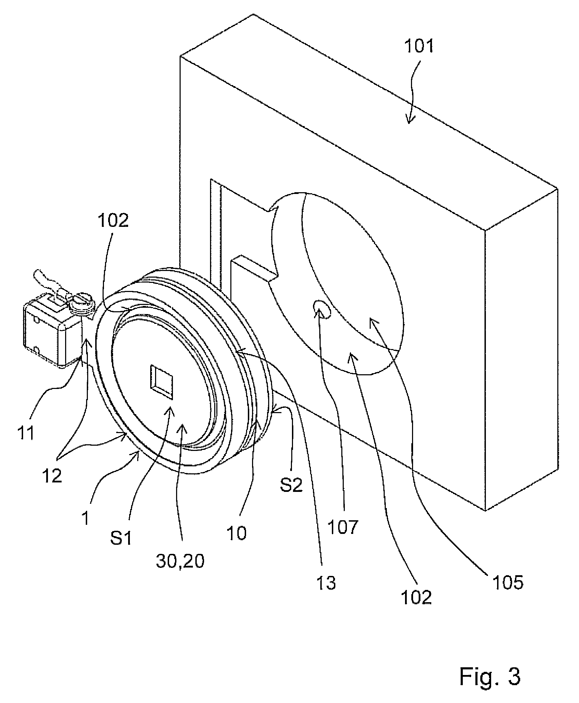

In **Fig. 3** sind eine Formplatte 101, insbesondere eine Hälfte von dieser, und ein Werkzeugeinsatz 1 in Explosionsdarstellung gezeigt. Die Formplatte 101 ist für ein Spritzgießwerkzeug zum Herstellen von Bauteilen aus einem fließfähigen Material ausgebildet. Sie hat ein Formnest 102 in dem eine Werkzeugeinsatzaufnahme 105 ausgebildet ist. In letzterer ist der Werkzeugeinsatz 1 aufgenommen. Insbesondere ist der Werkzeugeinsatz 1 mittels eines lösbaren Fixiermittels (nicht dargestellt) in der Werkzeugeinsatzaufnahme 105 fixiert. Der Werkzeugeinsatz 1 ist weitestgehend schwimmend in der Werkzeugeinsatzaufnahme 105 gelagert. Dabei ist der Grundkörper 10 thermisch mit der Werkzeugeinsatzaufnahme 105 gekoppelt, insbesondere durch eine relativ große Kontaktfläche. Die umlaufende Nut im Werkzeugeinsatz 1 wird durch den Einbau in die Werkzeugeinsatzaufnahme 105 zu einem Fluidkanal 13, dem durch einen Fluidkanal 107 in der Formplatte 101 ein Wärmeträgermedium zugeführt wird. Dadurch kann das Wärmeträgermedium direkt am Werkzeugeinsatz 1 entlang geführt werden.

Der Werkzeugeinsatz 1 hat eine in Richtung des Formnests 102 weisende sowie formgebende Vorderseite S1, welche erkennbar dreidimensional ausgebildet ist. Eine Rückseite S2 des Werkzeugeinsatzes 1 weist in Richtung der Formplatte 101. In Richtung dieser Rückseite S2 hat der Werkzeugeinsatz 1 einen Grundkörper 10, welcher in Richtung der Vorderseite S1 eine Schichtheizung 20 und einen Schicht-Thermofühler 30 trägt. Zum näheren Aufbau sei an dieser Stelle auf die Beschreibung der Fig. 1, 2 und 7 verwiesen. Die Schichtheizung 20 ist weiterhin in Richtung der Vorderseite S1 von einer abschließenden Konturschicht 26 überzogen, welche die formgebende Vorderseite S1 ausbildet, was ebenfalls näher in den Ausführungen zu den Fig. 1, 2 und 7 beschrieben ist.

Die Schichtheizung 20 und der Schicht-Thermofühler 30 haben jeweils Anschlusskontakte, die auf einer Zunge 11 des Grundkörpers 10 angeordnet sind, wobei die Zunge 11 außerhalb des Formnestes 102 positioniert ist. In Richtung der Vorderseite S1 bildet die Zunge 11 eine Dichtfläche 12 aus, welche den formgebenden Bereich der Vorderseite S1 begrenzt. Wie man erkennt umfasst die Dichtfläche 12 die gesamte formgebende Vorderseite S1 radial. Auf diese Weise ist die Dichtung durchgängig und Dichtheitsproblemen an Übergängen werden vermieden.

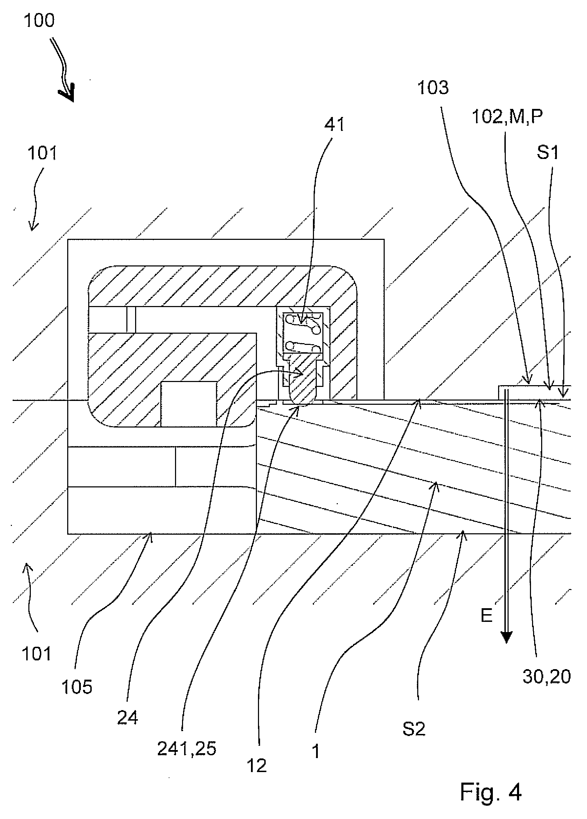

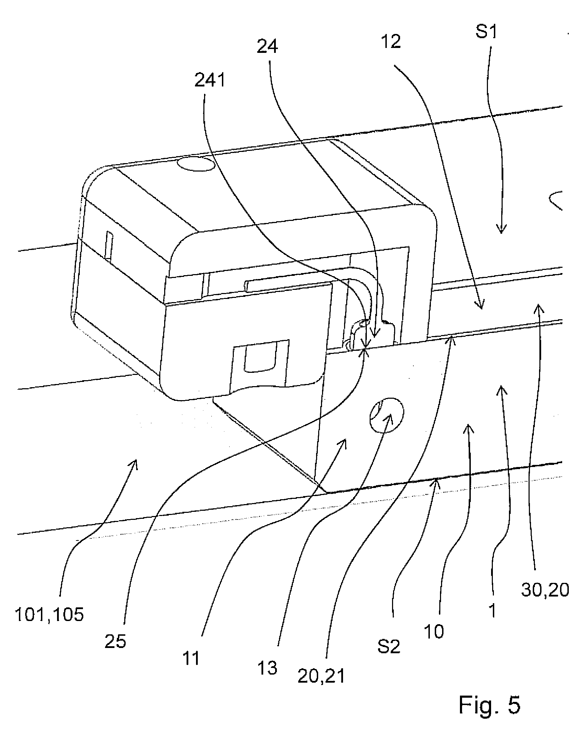

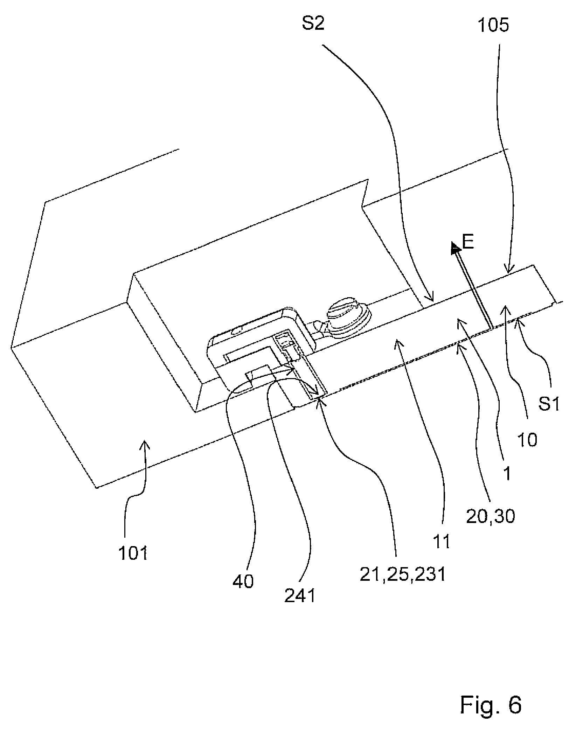

Die **Fig. 4****,** **5** **und** **6** zeigen jeweils einen Schnitt einer Detailansicht durch einen Werkzeugeinsatz 1 im Bereich des elektrischen Anschlusses einer Schichtheizung 20. In Fig. 4 sind dabei zwei Hälften einer Formplatte 101 in geschlossener Position zu sehen, wohingegen in den Fig. 5 und 6 nur eine Hälfte der Formplatte 101 sichtbar ist.

Die Formplatten 101 der Fig. 4 bis 6 bilden jeweils ein Formnest 102 mit einer formgebenden Oberfläche 103 aus. Außerdem haben sie eine Werkzeugeinsatzaufnahme 105, in welcher der Werkzeugeinsatz 1 aufgenommen ist.

Der Werkzeugeinsatz 1 hat eine in Richtung des Formnests 102 weisende sowie formgebende Vorderseite S1 und eine in Richtung der Formplatte 101 weisende Rückseite S2. In Richtung der Rückseite S2 hat der Werkzeugeinsatz 1 einen Grundkörper 10, welcher in Richtung der Vorderseite S1 eine Schichtheizung 20 trägt. Außerdem trägt er hier auch einen Schicht-Thermofühler 30. Zum Aufbau der Schichtheizung 20 mit ihrer Heizleiterbahn 21 und des Schicht-Thermofühlers 30 sei an dieser Stelle auf die Ausführungen zu den Fig. 1, 2 und 7 verwiesen. Die Heizleiterbahn 21 ist jeweils mit Anschlusskontakten 24 versehen. Gleiches gilt für das Schicht-Thermoelement 30.

Gemäß der Fig. 4 und 5 sind die Anschlusskontakte 24 jeweils auf einer Zunge 11 des Grundkörpers 10 angeordnet. Die Anschlusskontakte 24 liegen hier auf der Vorderseite S1, weswegen die Zunge 11 außerhalb des Formnestes 102 positioniert ist. Auf der Zunge 11 ist in Richtung der Vorderseite S1 eine Dichtfläche 12 ausgebildet, welche den formgebenden Bereich der Vorderseite S1 begrenzt. Hierdurch liegen die Anschlusskontakte 24 außerhalb des formgebenden Bereichs der Vorderseite S1. Eine Anschlussfläche 25 der Heizleiterbahn 21 liegt dabei auf der Zunge 11 frei, insbesondere ist die Anschlussfläche 25 nicht von einer ersten Isolationsschicht 22 und/oder einer Konturschicht 26 bedeckt. Korrespondierend mit der Anschlussfläche 25 ist der Anschlusskontakt 24 mit einer Kontaktfläche 241 ausgebildet. Gemäß Fig. 4 wird der Anschlusskontakt 24 mit seiner Kontaktfläche 241 mittels eines Kraftspeichers, insbesondere eines Federelements 41, auf die Anschlussfläche 25 gepresst. Dahingegen ist Kontaktfläche 241 des Anschlusskontakts 24 gemäß Fig. 5 stoffschlüssig mit der Anschlussfläche 25 verbunden, insbesondere durch Löten oder Schweißen.

Eine Besonderheit ist in Fig. 5 zu erkennen, wo ein Fluidkanal 13 im Grundkörper 10 ausgebildet ist, um diesen besonders schnell kühlen zu können.

Gemäß Fig. 6 ist die Heizleiterbahn 21 und das Schicht-Thermoelement 30 mit Anschlusskontakten 24 versehen, die in Richtung der Rückseite S2 durch den Grundkörper 10 hindurchgeführt sind. Hierfür ist ein Isolationskörper 40 mit den Anschlusskontakten 24 durch den Grundkörper 10 hindurchgeführt. Der Isolationskörper 40 und die Anschlusskontakte 24 schließen auf der Seite der Schichtheizung 20 bündig mit dem Grundkörper 10 ab und die Anschlusskontakte 24 bilden hier Kontaktflächen 241 aus. Im Bereich dieser Kontaktflächen 241 weist die zweite elektrische Isolationsschicht 23 eine Aussparung 231 auf. Weiterhin sind die Anschlusskontakte 24 stoffschlüssig mit den Anschlussflächen 25 der Heizleiterbahn 21 verbunden. Insbesondere ist die Heizleiterbahn 21 mit ihren Anschlusskontakten 24 in Dickschichttechnologie auf die Kontaktflächen 241 der Anschlusskontakte 24 aufgebracht.

Eine detaillierte Ansicht eines Anschlusses gemäß Fig. 6 sowie der Aufbau der Schichtheizung 20 und des Schicht-Thermofühlers 30 findet sich in **Fig. 7****.** Hier ist eine Detailansicht eines Werkzeugeinsatzes 1 in einem Formnest 102 in einer Formplatte 101 eines Spritzgießwerkzeugs zum Herstellen von Bauteilen aus einem fließfähigen Material gezeigt. In Richtung des Formnests 102 weist eine formgebenden Vorderseite S1 des Werkzeugeinsatzes1 und in Richtung der Formplatte 101 eine Rückseite S2. Ein in Richtung der Rückseite S2 weisender Grundkörper 10 des Werkzeugeinsatzes 1 trägt in Richtung der Vorderseite S1 eine Schichtheizung 20.

In der Formplatte 101, insbesondere im Bereich des Formnestes 102 ist eine Werkzeugeinsatzaufnahme 105 ausgebildet, in welcher der Werkzeugeinsatz 1 aufgenommen ist. Der Werkzeugeinsatz 1 ist mittels eines lösbaren Fixiermittels 108, insbesondere einer Schraube, in der Werkzeugeinsatzaufnahme 105 fixiert. Das Fixiermittel 108 ist durch eine außerhalb des Formnestes 102 liegende Öffnung 109 in der Formplatte 101 betätigbar. Wie hier zu sehen ist, greift die Schraube in eine Gewindebohrung 14 auf der Rückseite S2 des Grundkörpers 10 ein. Der Grundkörper 10 besteht dabei aus einem Werkzeugstahl, oder aus einer Legierung umfassend Chrom, Wolfram, Nickel, Molybdän und Kohlenstoff oder einer Legierung umfassend Chrom, Mangan, Phosphor, Silicium, Schwefel und Kohlenstoff oder einer Legierung umfassend Chrom, Titan, Niob, Mangan und Kohlenstoff.

Durch einen thermischen Kontakt zwischen dem Grundkörper 10 und der Werkzeugeinsatzaufnahme 105 bzw. der Formplatte 101 kann eine Wärmeenergie E aus dem Formnest 102 und der Schichtheizung 20 durch den Grundkörper 10 hindurch in die Formplatte 101 geleitet werden. Zur schnellen Ableitung der Wärmeenergie E sind zudem ein Fluidkanal 107 in der Formplatte 101 und ein Fluidkanal 13 in dem Grundkörper 10 vorgesehen, durch die jeweils ein Wärmeträgermedium F leitbar ist.

Die Schichtheizung 20 weist eine in Dickschichttechnologie hergestellte Heizleiterbahn 21 auf, welche zwischen 1 bis 50 Mikrometer dick ist. Sie besteht aus Ag, Pd, Pt, Ru, Au oder Mischungen daraus. Hergestellt ist sie in einem 2D- bzw.- einem 3D-Beschichtungsverfahren, wofür sich insbesondere InkJet-Verfahren, Aerosol-Verfahren, Dispensen bzw. Mikro-Dispensen, Tampondruckverfahren und Siebdruckverfahren eignen.

Weiterhin weist die Schichtheizung 20 eine in Dickschichttechnologie hergestellte sowie die Heizleiterbahn 21 in Richtung der Vorderseite S1 überziehende erste elektrische Isolationsschicht 22 auf. Diese ist zwischen 10 bis 50 Mikrometer dick, besteht aus Glas, Glaskeramik oder Email und ist in einem 2D- bzw.- einem 3D-Beschichtungsverfahren hergestellt. Hierfür eignen sich ebenfalls InkJet-Verfahren, Aerosol-Verfahren, Dispensen bzw. Mikro-Dispensen, Tampondruckverfahren und Siebdruckverfahren, aber auch Elektrophorese, Sprüh- oder Tauchverfahren oder andere in der Emailtechnik übliche Verfahren.

Zwischen der Heizleiterbahn 21 und dem Grundkörper 10 umfasst die Schichtheizung 20 eine in Dickschichttechnologie hergestellte zweite elektrische Isolationsschicht 23. Diese ist zwischen 10 bis 50 Mikrometer dick, besteht aus Glas, Glaskeramik oder Email, und ist in einem 2D- bzw.- einem 3D-Beschichtungsverfahren hergestellt. Hierfür eignen sich ebenfalls InkJet-Verfahren, Aerosol-Verfahren, Dispensen bzw. Mikro-Dispensen, Tampondruckverfahren und Siebdruckverfahren, aber auch Elektrophorese, Sprüh- oder Tauchverfahren oder andere in der Emailtechnik übliche Verfahren.

Die Heizleiterbahn 21 ist mit Anschlusskontakten 24 versehen, die in Richtung der Rückseite S2 durch den Grundkörper 10 hindurchgeführt sind. Zu diesem Zweck ist ein Isolationskörper 40 mit den Anschlusskontakten 24 durch den Grundkörper 10 hindurchgeführt. Dieser schließt auf der Seite der Schichtheizung 20 bündig mit dem Grundkörper 10 ab und die Anschlusskontakte 24 bilden auf dieser Seite Kontaktflächen 241 aus. Die zweite elektrische Isolationsschicht 23 hat im Bereich der Kontaktflächen 241 eine Aussparung 231. Indem die Heizleiterbahn 21 mit ihren Anschlussbereichen in Dickschichttechnologie auf die Kontaktflächen 241 der Anschlusskontakte 24 aufgebracht ist, besteht zwischen den Anschlusskontakten 24 und den Anschlussflächen 25 der Heizleiterbahn 21 eine stoffschlüssige Verbindung.

Eingebettet zwischen der ersten elektrischen Isolationsschicht 22 und der zweiten elektrischen Isolationsschicht 23 trägt der Grundkörper 10 in Richtung der Vorderseite S1 zudem einen Schicht-Thermofühler 30. Nicht zu sehen sind dessen elektrische Anschlusskontakte, welche analog zu denen der Schichtheizung 20 ausbildbar sind.

Die Schichtheizung 20 ist in Richtung der Vorderseite S1 von einer abschließenden Konturschicht 26 überzogen, welche die formgebende Vorderseite S1 ausbildet. Die Konturschicht 26 ist im Wesentlichen zwischen 50 und 500 Mikrometer dick. Nur in kleinen lokalen Spitzenbereichen ist eine Materialstärke von bis zu 2 mm vorgesehen. Ferner besteht die Konturschicht aus einem Metall, insbesondere aus einem Werkzeugstahl oder aus Nickel. Hergestellt ist sie durch ein Detonationsbeschichtungs-Verfahren oder durch Mikroschmieden. Alternativ kommt eine Herstellung in Galvanotechnik oder durch ein chemisches Beschichtungsverfahren in Betracht. Um eine hoch strapazierfähige Festlegung der Konturschicht 26 zu erreichen ist unter dieser eine chemisch resistente Zwischenschicht 27angeordnet. Diese schützt die erste elektrische Isolationsschicht 22 während einer Oberflächenvorbereitung mittels aggressiver Reinigungsmittel. Anschließend bildet die Zwischenschicht 27 eine Haftschicht für die Konturschicht 20 aus.

Wie man erkennt, ist der Werkzeugeinsatz 1 mit der Vorderseite S1 bündig in die formgebende Oberfläche 103 des Formnestes 102 eingebettet. Dafür sind die Vorderseite S1 des Werkzeugeinsatzes 1 und die formgebenden Oberfläche 103 des Formnestes 102 gemeinsam in der gezeigten Einbausituation des Werkzeugeinsatzes 1 in der Werkzeugeinsatzaufnahme 105 durch Spanen, Schleifen und Polieren bearbeitet. Diese Bearbeitung erfolgte insbesondere bei erwärmter Schichtheizung 20. Außerdem wurde eine Narbung auf der Vorderseite S1 und der formgebenden Oberfläche 103 des Formnestes 102 gemeinsam in der Einbausituation des Werkzeugeinsatzes 1 in der Werkzeugeinsatzaufnahme 105 hergestellt.

Die Erfindung ist nicht auf eine der vorbeschriebenen Ausführungsformen beschränkt, sondern in vielfältiger Weise abwandelbar. Insbesondere kann die Schichtheizung 20 je nach Materialwahl nur eine oder gar keine Isolationsschicht aufweisen, bzw. kann die erste Isolationsschicht 22 und die Konturschicht 26 von einer einzigen Schicht ausgebildet sein. Auch sind Kombinationen der verschiedenen elektrischen Anschlüsse möglich, sowie unterschiedlich viele Schicht-Thermoelemente 30 und Heizleiterbahnen 20 in einem gemeinsamen Schichtaufbau realisierbar. Innerhalb des Formnestes 101 liegende Umfangsgrenzen des Werkzeugeinsatzes 1 können gezielt in Sichtkanten oder Design-Sicken des Bauteils verlegt sein. Schließlich besteht grundsätzlich auch die Möglichkeit der Aufbringung der Konturschicht 26 über die Umfangsgrenze des Werkzeugeinsatzes 1 hinweg in der Einbausituation in der Werkzeugeinsatzaufnahme 105, sodass ein fließender Übergang zwischen dem Werkzeugeinsatz 1 und der formgebenden Oberfläche 103 des Formnestes 102 geschaffen wird. Denkbar ist außerdem die Anordnung von mehreren Werkzeugeinsätzen 1 in einem einzigen Formnest 102.

**Bezugszeichenliste**

| | | | |
|---|---|---|---|
| 1 | Werkzeugeinsatz | 40 | Isolationskörper |
| | | 41 | Federelement |
| 10 | Grundkörper | | |
| 11 | Zunge | 100 | Spritzgießwerkzeug |
| 12 | Dichtfläche | 101 | Formplatte |
| 13 | Fluidkanal | 102 | Formnest |
| 14 | Gewindebohrung | 103 | formgebende Oberfläche (Formnest) |
| 20 | Schichtheizung | 104 | Angussöffnung |
| 21 | Heizleiterbahn | 105 | Werkzeugeinsatzaufnahme |
| 22 | erste elektrische Isolationsschicht | 107 | Fluidkanal |
| 23 | zweite elektrische | 108 | Fixiermittel |
| | Isolationsschicht | 109 | Öffnung |
| 231 | Aussparung (zweite elektrische Isolationsschicht) | 110 | Spritzgießdüse |
| | | 111 | Düseneinsatz |
| 24 | Anschlusskontakt | | |
| 241 | Kontaktfläche (des Anschlusskontakts) | E | Wärmeenergie |
| | | F | Wärmeträgermedium |
| 25 | Anschlussfläche | M | Material |
| 26 | Konturschicht | P | Bauteil |
| 27 | Zwischenschicht | S1 | Vorderseite |
| | | S2 | Rückseite |
| 30 | Schicht-Thermofühler | | |

## Patentansprüche

1. Formplatte (101) für ein Spritzgießwerkzeug (100) zum Herstellen von Bauteilen (P) aus einem fließfähigen Material (M), umfassend ein von einer formgebenden Oberfläche (103) eingefasstes Formnest (102), eine in das Formnest (102) mündende Angussöffnung (104) und eine Werkzeugeinsatzaufnahme (105), in welcher ein Werkzeugeinsatz (1) zur zumindest abschnittsweisen Begrenzung des Formnestes (102) aufgenommen ist,
- wobei der Werkzeugeinsatz (1) zumindest abschnittsweise das Formnest (102) begrenzt, welches in der Formplatte (101) ausgebildet ist,
- wobei der Werkzeugeinsatz (1) einen Grundkörper (10) aufweist, der eine formgebende Vorderseite (S1) für das Formnest (102) und eine der formgebenden Vorderseite (S1) gegenüberliegende Rückseite (S2) aufweist, und
- wobei der Grundkörper (10) auf seiner formgebenden Vorderseite (S1) eine Schichtheizung (20) trägt,
**dadurch gekennzeichnet, dass**
die Schichtheizung (20) eine in Dickschichttechnologie hergestellte Heizleiterbahn (21) aufweist,
wobei die Schichtheizung (20) eine in Dickschichttechnologie hergestellte sowie die Heizleiterbahn (21) in Richtung der Vorderseite (S1) überziehende erste elektrische Isolationsschicht (22) aufweist.

2. Formplatte (101) nach Anspruch 1, **dadurch gekennzeichnet, dass** die Schichtheizung (20) zwischen der Heizleiterbahn (21) und dem Grundkörper (10) eine in Dickschichttechnologie hergestellte zweite elektrische Isolationsschicht (23) aufweist.

3. Formplatte (101) nach einem der Ansprüche 1 oder 2, **dadurch gekennzeichnet, dass**
die Heizleiterbahn (21) mit Anschlusskontakten (24) versehen ist, die auf einer Zunge (11) des Grundkörpers (10) angeordnet sind, wobei die Zunge (11) außerhalb des Formnestes (102) positionierbar ist und auf der Zunge (11) in Richtung der Vorderseite (S1) eine Dichtfläche (12) ausgebildet ist, welche den formgebenden Bereich der Vorderseite (S1) begrenzt.

4. Formplatte (101) nach einem der Ansprüche 1 bis 3, **dadurch gekennzeichnet, dass**
die Heizleiterbahn (21) mit Anschlusskontakten (24) versehen sind, die in Richtung der Rückseite (S2) durch den Grundkörper (10) hindurchgeführt sind.

5. Formplatte (101) nach einem der vorhergehenden Ansprüche, **dadurch gekennzeichnet, dass** die Schichtheizung (20) in Richtung der Vorderseite (S1) von einer abschließenden Konturschicht (26) überzogen ist, welche die formgebende Vorderseite (S1) ausbildet.

6. Formplatte (101) nach Anspruch 5, **dadurch gekennzeichnet, dass** die Konturschicht (26) im Wesentlichen zwischen 50 und 500 Mikrometer dick ist.

7. Formplatte (101) nach einem der Ansprüche 5 oder 6, **dadurch gekennzeichnet, dass**
die Konturschicht (26) durch Detonationsbeschichtung oder durch Mikroschmieden hergestellt ist.

8. Formplatte (101) nach einem der Ansprüche 5 oder 6, **dadurch gekennzeichnet, dass**
die Konturschicht (26) in Galvanotechnik oder durch ein chemisches Beschichtungsverfahren hergestellt ist.

9. Formplatte (101) nach einem der Ansprüche 5 bis 8, **dadurch gekennzeichnet, dass**
die Konturschicht (26) aus einem Metall besteht, insbesondere aus einem Werkzeugstahl oder aus Nickel.

10. Formplatte (101) nach einem der Ansprüche 5 bis 9, **dadurch gekennzeichnet, dass** unter der Konturschicht (26) eine chemisch resistente Zwischenschicht (27) angeordnet ist.

11. Formplatte (101) nach einem der vorhergehenden Ansprüche, **dadurch gekennzeichnet, dass** der Grundkörper (10) aus Hartmetall oder Werkzeugstahl oder einer Legierung umfassend Chrom, Wolfram, Nickel, Molybdän und Kohlenstoff oder einer Legierung umfassend Chrom, Mangan, Phosphor, Silicium, Schwefel und Kohlenstoff oder einer Legierung umfassend Chrom, Titan, Niob, Mangan und Kohlenstoff hergestellt ist.

12. Formplatte (101) nach einem der vorhergehenden Ansprüche, **dadurch gekennzeichnet, dass** der Grundkörper (10) aus einer Keramik hergestellt ist.

13. Formplatte (101) nach einem der vorhergehenden Ansprüche, **dadurch gekennzeichnet, dass** der Grundkörper (10) in Richtung der Vorderseite (S1) einen Schicht-Thermofühler (30) trägt.

14. Formplatte (101) nach einem der vorhergehenden Ansprüche, **dadurch gekennzeichnet, dass** der Werkzeugeinsatz (1) mit der formgebenden Vorderseite (S1) bündig in die formgebende Oberfläche (103) des Formnestes (102) eingebettet ist.

15. Formplatte (101) nach einem der vorhergehenden Ansprüche, **dadurch gekennzeichnet, dass** die Vorderseite (S1) des Werkzeugeinsatzes (1) und die formgebende Oberfläche (103) des Formnestes (102) gemeinsam in der Einbausituation des Werkzeugeinsatzes (1) in der Werkzeugeinsatzaufnahme (105) durch Spanen und/oder Schleifen und/oder Polieren bearbeitet sind.

16. Formplatte (101) nach einem der vorhergehenden Ansprüche, **dadurch gekennzeichnet, dass** in dieser Fluidkanäle (107) ausgebildet sind.

17. Formplatte (101) nach einem der vorhergehenden Ansprüche, **dadurch gekennzeichnet, dass** der Grundkörper (10) thermisch mit der Werkzeugeinsatzaufnahme (105) gekoppelt ist.

18. Verfahren zum Betrieb eines Werkzeugeinsatzes (1) in einem Formnest (102) einer Formplatte (101) eines Spritzgießwerkzeugs (100) zum Herstellen von Bauteilen (P) aus einem fließfähigen Material (M) nach einem der Ansprüche 1 bis 17, **gekennzeichnet durch** folgende Schritte:
• Erwärmen der Schichtheizung (20) **durch** Anlegen einer Spannung;
• Anschließendes Starten eines Füllzyklus, bei dem fließfähiges Material (M) in das Formnest (102) eingeleitet wird;
• Reduzieren oder Ablegen der Spannung der Schichtheizung (20) vor, während oder nach dem Füllzyklus;
• Öffnen des Formnests (102) nach einer Abkühlphase und Entnahme des wenigstens teilweise ausgehärteten Bauteils (P).

## Claims

1. Die plate (101) for an injection moulding tool (100) for the manufacture of components (P) from a flowable material (M), comprising a mould cavity (102) enclosed in a shaping surface (103), an injection opening (104) which opens into the mould cavity (102) and a tool insert receptacle (105), in which a tool insert (1) is inserted up to the limitation of the mould cavity (102) at least section-wise,
▪ whereby the tool insert (1) at least limits the mould cavity (102) section-wise, which is formed in the mould plate (101),
▪ whereby the tool insert (1) has a base body (10) having a shaping foreside (S1) of the mould cavity (102) and a backside (S2) opposite the shaping foreside (S1), and
▪ whereby the base body (10) on its shaping foreside (S1) has a layer heater (20),
**characterised in that**
▪ the layer heater (20) comprises a heat conduction path (21) produced by thick layer technology,
▪ whereby the layer heater (20) has a heat conduction path (21) produced by thick layer technology and in the direction of the foreside (S1) a coating of the first electrical insulation layer (22).

2. Die plate (101) according to claim 1, **characterised in that** the layer heater (20) between the heat conduction path (21) and the base body (10) has a second electrical insulation layer (23) produced by thick film technology.

3. Die plate (101) according to any one of claims 1 or 2, **characterised in that** the heat conduction path (21) is provided with connection contacts (24), which are arranged on a tongue (11) of the base body (10), whereby the tongue (11) outside the mould cavity (102) can be positioned, and a sealing surface (12) is formed on the tongue (11) towards the foreside (S1), which limits the shaping region of the foreside (S1).

4. Die plate (101) according to any one of claims 1 to 3, **characterised in that** the heat conduction path (21) is provided with connection contacts (24), which are guided in the direction of the backside (S2) through the base body (10).

5. Die plate (101) according to any one of the preceding claims, **characterised in that** the layer heater (20) in the direction of the foreside (S1) is covered by a terminating contour layer (26) which constitutes the shaping foreside (S1).

6. Die plate (101) according to claim 5, **characterised in that** the contour layer (26) is substantially between 50 and 500 microns thick.

7. Die plate (101) according to any one of claims 5 or 6, **characterised in that** the contour layer (26) is produced by detonation coating or by micro-forging.

8. Die plate (101) according to any one of claims 5 or 6, **characterised in that** the contour layer (26) is produced by electroplating or a chemical coating process.

9. Die plate (101) according to one of claims 5 to 8, **characterised in that** the contour layer (26) consists of a metal, in particular, a tool steel or nickel.

10. Die plate (101) according to any one of claims 5 to 9, **characterised in that** under the contour layer (26) a chemical-resistant intermediate layer (27) is arranged.

11. Die plate (101) according to one of the preceding claims, **characterised in that** the base body (10) is made of cemented carbide or tool steel or an alloy comprising chromium, tungsten, nickel, molybdenum and carbon, or an alloy comprising chromium, manganese, phosphorus, silicon, sulphur and carbon, or an alloy comprising chromium, titanium, niobium, manganese and carbon.

12. Die plate (101) according to any one of the preceding claims, **characterised in that** the base body (10) is made of a ceramic.

13. Die plate (101) according to any one of the preceding claims, **characterised in that** the base body (10) has a layer thermal sensor (30) towards the frontside (S1).

14. Die plate (101) according to any one of the preceding claims, **characterised in that** the tool insert (1) is embedded flush with the shaping foreside (S1) in the shaping surface (103) of the mould cavity (102).

15. Die plate (101) according to any one of the preceding claims, **characterised in that** the foreside (S1) of the tool insert (1) and the shaping surface (103) of the mould cavity (102) are worked together in the installation situation of the tool insert (1) in the tool insert receptacle (105) by machining and/or grinding and/or polishing.

16. Die plate (101) according to any one of the preceding claims, **characterised in that** fluid channels (107) are formed in it.

17. Die plate (101) according to any one of the preceding claims, **characterised in that** the base body (10) is thermally coupled with the tool insert receptacle (105).

18. A process for operating a tool insert (1) in a mould cavity (102) of a die plate (101) of an injection moulding tool (100) for the production of components (P) from a flowable material (M) according to one of claims 1 to 17, **characterised by** following steps:
▪ heating the layer heater (20) by applying a voltage;
▪ subsequent starting of a filling cycle in which flowable material (M) is led into the mould cavity (102);
▪ reducing or dropping the voltage of the layer heater (20) before, during or after the filling cycle;
▪ opening of the mould cavity (102) after a cooling phase and removal of an at least partially cured component (P).

## Revendications

1. Plaque de moulage (101) pour un outil de moulage par injection (100) pour fabriquer des pièces (P) en un matériau fluide (M), comprenant une poche de moulage (102) entourée par une surface génératrice de forme (103), une ouverture d'injection (104) débouchant dans la poche de moulage (102) et un logement de garniture d'outil (105) dans lequel une garniture d'outil (1) est logée pour délimiter au moins en partie la poche de moulage (102),
- la garniture d'outil (1) délimitant au moins en partie la poche de moulage (102) qui est conçue dans la plaque de moulage (101),
- la garniture d'outil (1) comportant un corps de base (10) qui comporte une face avant génératrice de forme (S1) pour la poche de moulage (102) et une face arrière (S2) située à l'opposé de la face avant génératrice de forme (S1), et
- le corps de base (10) portant un chauffage de couche (20) sur sa face avant génératrice de forme (S1),
**caractérisée en ce que** le chauffage de couche (20) comporte une bande conductrice chauffante (21) fabriquée avec la technique en couche épaisse,
le chauffage de couche (20) comportant une première couche d'isolation électrique (22) fabriquée avec la technique en couche épaisse et recouvrant la bande conductrice chauffante (21) en direction de la face avant (S1).

2. Plaque de moulage (101) selon la revendication 1, **caractérisée en ce que**
le chauffage de couche (20) comporte, entre la bande conductrice chauffante (21) et le corps de base (10), une deuxième couche d'isolation électrique (23) fabriquée avec la technique en couche épaisse.

3. Plaque de moulage (101) selon l'une des revendications 1 ou 2, **caractérisée en ce que** la bande conductrice chauffante (21) est munie de contacts de raccordement (24) qui sont agencés sur une languette (11) du corps de base (10), la languette (11) pouvant être positionnée en dehors de la poche de moulage (102) et une surface d'étanchéité (12), qui délimite la zone de la face avant génératrice de forme (S1), étant conçue sur la languette (11) en direction de la face avant (S1).

4. Plaque de moulage (101) selon l'une des revendications 1 à 3, **caractérisée en ce que** la bande conductrice chauffante (21) est munie de contacts de raccordement (24) qui passent à travers le corps de base (10) en direction de la face arrière (S2).

5. Plaque de moulage (101) selon l'une des revendications précédentes, **caractérisée en ce que** le chauffage de couche (20) est recouvert en direction de la face avant (S1) par une couche de contour terminale (26) qui constitue la face avant génératrice de forme (S1).

6. Plaque de moulage (101) selon la revendication 5, **caractérisée en ce que** la couche de contour (26) a une épaisseur sensiblement comprise entre 50 et 500 micromètres.

7. Plaque de moulage (101) selon l'une des revendications 5 ou 6, **caractérisée en ce que** la couche de contour (26) est fabriquée au moyen d'un procédé de revêtement par détonation ou de microforgeage.

8. Plaque de moulage (101) selon l'une des revendications 5 ou 6, **caractérisée en ce que** la couche de contour (26) est fabriquée par galvanoplastie ou par un procédé de revêtement chimique.

9. Plaque de moulage (101) selon l'une des revendications 5 à 8, **caractérisée en ce que** la couche de contour (26) est en métal, notamment en acier à outils ou en nickel.

10. Plaque de moulage (101) selon l'une des revendications 5 à 9, **caractérisée en ce qu'**une couche intermédiaire chimiquement résistante (27) est agencée sous la couche de contour (26).

11. Plaque de moulage (101) selon l'une des revendications précédentes, **caractérisée en ce que** le corps de base (10) est fabriqué en métal dur ou en acier à outils ou en un alliage comprenant le chrome, le tungstène, le nickel, le molybdène et le carbone ou en un alliage comprenant le chrome, le manganèse, le phosphore, le silicium, le soufre et le carbone ou en un alliage comprenant le chrome, le titane, le niobium, le manganèse et le carbone.

12. Plaque de moulage (101) selon l'une des revendications précédentes, **caractérisée en ce que** le corps de base (10) est fabriqué en céramique.

13. Plaque de moulage (101) selon l'une des revendications précédentes, **caractérisée en ce que** le corps de base (10) porte un capteur de température de couche (30) en direction de la face avant (S1).

14. Plaque de moulage (101) selon l'une des revendications précédentes, **caractérisée en ce que** la garniture d'outil (1) est noyée dans la surface génératrice de forme (103) de la poche de moulage (102) en affleurant la face avant génératrice de forme (S1).

15. Plaque de moulage (101) selon l'une des revendications précédentes, **caractérisée en ce que** la face avant (S1) de la garniture d'outil (1) et la surface génératrice de forme (103) de la poche de moulage (102) sont usinées ensemble dans la situation de montage de la garniture d'outil (1) dans le logement de garniture d'outil (105) par enlèvement de copeaux et/ou meulage et/ou polissage.

16. Plaque de moulage (101) selon l'une des revendications précédentes, **caractérisée en ce que** des canaux de fluide (107) sont conçus dans ladite plaque de moulage.

17. Plaque de moulage (101) selon l'une des revendications précédentes, **caractérisée en ce que** le corps de base (10) est couplé thermiquement au logement de garniture d'outil (105).

18. Procédé d'utilisation d'une garniture d'outil (1) dans une poche de moulage (102) d'une plaque de moulage (101) d'un outil de moulage par injection (100) pour fabriquer des pièces (P) en un matériau fluide (M) selon l'une des revendications 1 à 17, **caractérisé par** les étapes suivantes :
- chauffage du chauffage de couche (20) par application d'une tension ;
- démarrage consécutif d'un cycle de remplissage lors duquel un matériau fluide (M) est introduit dans la poche de moulage (102) ;
- réduction ou suppression de la tension du chauffage de couche (20) avant, pendant ou après le cycle de remplissage ;
- ouverture de la poche de moulage (102) après une phase de refroidissement et enlèvement de la pièce (P) au moins partiellement durcie.
